# EUROPÄISCHE PATENTSCHRIFT

(11) **EP 4 098 120 B1**
(45) Veröffentlichungstag und Bekanntmachung des Hinweises auf die Patenterteilung: **19.06.2024**
(21) Anmeldenummer: 22401011.6
(22) Anmeldetag: 30.05.2022
(51) Int. Cl.: A01M 7/00

(54) **GESTÄNGE EINES LANDWIRTSCHAFTLICHEN GERÄTS UND FELDSPRITZE**
AGRICULTURAL BOOM AND FIELD SPRAYER
RAMPE D'UN APPAREIL AGRICOLE ET PULVÉRISATEUR

(30) Priorität: 03.06.2021 DE 102021114405
(43) Veröffentlichungstag der Anmeldung: 07.12.2022
(73) Patentinhaber: Amazonen-Werke H. Dreyer SE & Co. KG, 49205 Hasbergen (DE)
(72) Erfinder: Kowollik, Daniel, 47443 Moers (DE)

(56) Entgegenhaltungen:
- EP-A1- 3 323 288
- DE-A1- 10 013 800
- DE-A1-102011 002 035
- US-A1- 2019 104 720
- US-A1- 2020 275 645
- Anonymous: "AGCO Enters into Targeted Spraying Technology Collaboration Agreement With Bosch, xarvio Digital Farming Solutions Powered by BASF and Raven Industries Inc. | Business Wire", , 28. Mai 2021 (2021-05-28), XP055974640, Gefunden im Internet: URL:https://www.businesswire.com/news/home /20210528005225/en/AGCO-Enters-into-Target ed-Spraying-Technology-Collaboration-Agree ment-With-Bosch-xarvio-Digital-Farming-Sol utions-Powered-by-BASF-and-Raven-Industrie s-Inc. [gefunden am 2022-10-25]

## Beschreibung

Die Erfindung betrifft ein Gestänge eines landwirtschaftlichen Geräts gemäß dem Oberbegriff des Patentanspruches 1 und eine landwirtschaftliche Feldspritze gemäß dem Oberbegriff des Patentanspruches 8.

Auf dem Gebiet der Landwirtschaft sind für unterschiedliche Anwendungsfälle eine Vielzahl von Varianten gezogener, angebauter und/oder selbstfahrender Geräte bekannt. Zu derartigen Geräten zählen beispielsweise Verteilmaschinen, die dazu dienen, festes, insbesondere granulares, und/oder flüssiges Material auszubringen. Hierunter fallen unter anderem Sä- und/oder Düngermaschinen zum Ablegen von Saatgut und/oder Dünger oder Feldspritzen zum Applizieren von Spritzmittel, wie beispielsweise Unkrautbekämpfungsmittel, Pflanzenschutzmittel und/oder Düngemittel. Neben Verteilmaschinen fallen auch Bodenbearbeitungs- und/oder Pflanzenbehandlungsgeräte, insbesondere Hackgeräte, unter derartige landwirtschaftliche Geräte.

Um während der Bearbeitung und/oder Behandlung eine besonders hohe Effizienz zu erreichen, weisen gattungsgemäße Geräte für gewöhnlich ein Gestänge mit verhältnismäßig großer Spannweite auf, an dem eine Mehrzahl bzw. Vielzahl von einzelnen Arbeitsmitteln, beispielsweise Werkzeuge, Vereinzelungs- und/oder Dosiervorrichtungen und/oder Spritzdüsen, angeordnet sind. Hierbei haben sich insbesondere reihenbezogene Anordnungen derartiger Arbeitsmittel durchgesetzt, die während des Arbeitsvorgangs mittels des Gestänges in und/oder quer zu einer Fahrtrichtung an dem Gerät, insbesondere nebeneinander, angeordnet sind. Während des Arbeitsvorgangs, insbesondere in Arbeitsstellung, kann die Spannweite bzw. Breite derartiger Gestänge somit im Bedarfsfall etwa 15 m, 40 m oder mehr betragen. Damit ein derartiges Gerät für Transportfahrten auch über den öffentlichen Straßenverkehr bewegt werden kann, sind diese für gewöhnlich in einer sogenannten Transportstellung verbringbar und/oder betreibbar. Um dabei eine maximal zulässige, insbesondere gesetzlich vorgeschriebene, Breite des Geräts samt Gestänge, von insbesondere etwa 3 m, nicht zu überschreiten, sind gattungsgemäße Gestänge überwiegend klappbar ausgeführt.

Ein derartiges Gestänge ist beispielsweise in der DE 10 2016 114 422 A1 beschrieben. Demnach ist ein Gestänge eines landwirtschaftlichen Geräts, insbesondere ein Verteilgestänge einer Feldspritze, mit mehreren Abschnitten bekannt, welche über Gelenke zwischen einer, insbesondere quer zu einer Arbeitsrichtung, ausgeklappten Arbeitsstellung, und einer, insbesondere geschachtelten und/oder etwa in oder senkrecht zur Arbeitsrichtung weisenden, zusammengefalteten Transportstellung verstellbar ist.

Um derartige Gestänge, insbesondere Abschnitte, und/oder die daran angeordneten Arbeitsmittel und/oder die auszubringenden Materialien, möglichst optimal auf die darunter liegende Nutzfläche und/oder Pflanze einzustellen, sind modernen landwirtschaftlichen Geräten, insbesondere deren Gestängen, je nach Anwendungsfall verschiedene Arten von Beleuchtungs- und/oder Erfassungsvorrichtungen zugeordnet. Eine solches Gestänge eines landwirtschaftlichen Geräts ist beispielsweise aus der WO 99/52354 A1 bekannt. Die Beleuchtungs- und/oder Erfassungsvorrichtung umfasst demnach eine Mehrzahl von Beleuchtungs- und/oder Erfassungselementen, welche über mehrere Halteeinrichtungen verteilt mit den Abschnitten gekoppelt sind, wobei wenigstens eine der Halteeinrichtungen zwischen Arbeits- und Transportstellung verstellbar an wenigstens einem der Abschnitte angeordnet ist. Darüber hinaus offenbaren DE102011002035A1 und EP3323288A1 Gestänge gemäß des Stands der Technik.

Problematisch bei derartig ausgeführten Gestängen sind die Auswirkungen der Beleuchtungs- und/oder Erfassungsvorrichtungen und dessen Halteeinrichtungen, auf die äußere Breite und/oder Höhe des Geräts samt Gestänge in der Transportstellung. Insbesondere bei der Verwendung einer Vielzahl von Beleuchtungs- und/oder Erfassungselementen, werden deren Halteeinrichtungen, insbesondere aufeinander anliegend und/oder gestapelt, jeweils in einem separat dafür vorgesehenen Bereich an und/oder jeweils zwischen den Abschnitten verbracht. Dadurch wird die beanspruchte Breite und/oder Höhe des Geräts samt Gestänge in Transportstellung signifikante beeinflusst. Dies wiederrum wirkt sich negativ auf die maximal erreichbare Spannweite und/oder Arbeitsbreite des Gestänges und damit des Geräts aus. Darüber hinaus wirkt sich eine derartige Ausführung auch negativ hinsichtlich des erreichbaren Arbeitsergebnisses aus, da verhältnismäßig nur eine geringe Anzahl an Beleuchtungs- und/oder Erfassungselementen entlang des Gestänges anbringbar sind.

Die der Erfindung zugrunde liegende Aufgabe besteht somit darin, ein Gestänge eines landwirtschaftlichen Geräts so zu gestalten, dass die Breite und/oder Höhe des Gestänges auch bei großen Spannweiten des Gestänges und/oder einer hohen Anzahl an Beleuchtungs- und/oder Erfassungselementen in Transportstellung minimal ist.

Diese Aufgabe wird erfindungsgemäß dadurch gelöst, dass die wenigstens eine verstellbare Halteeinrichtung in Transportstellung, vorzugsweise innerhalb einem von zwei gegenüberliegenden Abschnitten eingeschlossenen Zwischenraums gegenüberliegend und/oder gemeinsam, mit wenigstens einer weiteren Halteeinrichtung zwischen zwei aufeinanderfolgenden Abschnitten verbringbar ist.

Im Folgenden **ist unter einer erfindungsgemäßen "Beleuchtungs-** und/oder Erfassungsvorrichtung" **die Gesamtheit einer Mehrzahl von "Beleuchtungs- und/oder Erfassungselementen" zu verstehen, die an unterschiedlichen Positionen** entlang des Gestänges mittels der Halteeinrichtung angeordnet sind. Je nach Anwendungsart und/oder Bedarf kann an einem erfindungsgemäßen Gestänge, insbesondere an den Halteeinrichtungen, nur eine Beleuchtungsvorrichtung oder alternativ nur eine Erfassungsvorrichtung angeordnet sein. Ferner können die Beleuchtungsvorrichtung und die Erfassungsvorrichtung alternativ oder zusätzlich auch gemeinsam, insbesondere zu einer Baugruppe zusammengefasst, am Gestänge, insbesondere an den Halteeinrichtungen, angeordnet sein. Bei einer gemeinsamen Anordnung der Beleuchtungsvorrichtung mit der Erfassungsvorrichtung sind die einzelnen Beleuchtungs- und/oder Erfassungselemente, insbesondere zumindest ein Beleuchtungselement und zumindest ein Erfassungselement, bevorzugt zu einem Bauteil zusammengefasst ausgebildet, wobei alternativ oder zusätzlich auch eine getrennte Anordnung der Beleuchtungselemente zu den Erfassungselementen, insbesondere entlang der Halteeinrichtungen, denkbar ist.

Die Beleuchtungselemente sind bevorzugt jeweils nach Art einer Lichtquelle, insbesondere in Form einer LED oder dergleichen, ausgebildet und dazu eingerichtet, die Umgebung, insbesondere im Nahbereich, um das Gestänge und/oder unter dem Gestänge auszuleuchten. Die Erfassungselemente sind vorzugsweise nach Art von berührungsfreien, insbesondere optischen, Sensoren und/oder bilderfassender Kameras ausgebildet, und dazu eingerichtet, Informationen aus und/oder zur Umgebung, insbesondere zur Nutzfläche und/oder zum Pflanzenbestand, zu erfassen. Die Erfassungsvorrichtung, insbesondere das Erfassungselement, kann je nach Ausführungsform beispielsweise dazu eingerichtet sein, den Abstand des Gestänges zum Boden und/oder zur Pflanze oder alternativ oder zusätzlich die Art und/oder den Zustand der Pflanzen zu erfassen. Alternativ oder zusätzlich sind auch weitere bzw. andere Arten von Erfassungsvorrichtungen, insbesondere Erfassungselementen, denkbar, beispielsweise zur Erfassung von Temperaturen, von Luftbewegungen, insbesondere dessen Richtung und/oder Geschwindigkeit, von Eigenschaften und/oder Entwicklungsstadium der Pflanzen, insbesondere der Nutzpflanzen und/oder dem Wildbewuchs, und/oder von der Arbeitsqualität, insbesondere dem Benetzungsgrad der Pflanzen mit Spritzmittel, usw.

Die Beleuchtungs- und/oder Erfassungselemente sind in Arbeitsstellung und in Arbeits- bzw. Fahrtrichtung gesehen vorzugsweise auf einen zum Gestänge beabstandeten Bereich auf der Nutzfläche und/oder die Pflanzen ausgerichtet. Alternativ oder zusätzlich können die Halteeinrichtungen in Arbeitsstellung in oder entgegen der Arbeits- bzw. Fahrtrichtung, vom Gestänge abstehend ausgeführt sein, wobei die Beleuchtungs- und/oder Erfassungselemente mittels derartig ausgeführter Halteeinrichtungen beabstandet zum Gestänge angeordnet sind. Somit können die Nutzfläche und/oder die Pflanzen je nach Ausführungsform mit einem bestimmten Vor- und/oder Nachlauf zum Gestänge beleuchtet und/oder erfasst werden. Diese Ausführungsform ist insbesondere aufgrund der systembedingten Reaktionszeiten, beispielsweise aufgrund der Prozesse für die Datenverarbeitung und/oder zur Einstellung der Arbeitsmittel, vorteilhaft.

Das Gestänge, insbesondere dessen Abschnitte, umfassen in Arbeitsstellung gesehen vorzugsweise wenigstens einen auf der Oberseite angeordneten und quer zur Arbeitsrichtung verlaufenden Obergurt, wenigstens einen auf der Unterseite angeordneten und quer zur Arbeitsrichtung verlaufenden Untergurt, insbesondere an dem die Arbeitsmittel positioniert sind, und vorzugsweise einer Vielzahl zwischen dem Ober- und Untergurt angeordneter Diagonalelemente, insbesondere Streben. Sowohl der Ober- als auch der Untergurt können jeweils aus wenigstens einem Träger oder aus mehreren Trägern, beispielsweise nach Art von quadratischen oder runden Längsprofilen und/oder Blechkonstruktionen, ausgebildet sein.

Erfindungsgemäß umfasst das Gestänge weiterhin wenigstens zwei Halteeinrichtungen die einem gemeinsamen Abschnitt oder unterschiedlichen, insbesondere aufeinanderfolgenden, Abschnitten zugeordnet sind, wobei an jeder der wenigstens zwei Halteeinrichtungen wenigstens ein Beleuchtungs- und/oder Erfassungselement angeordnet ist. Mit anderen Worten kann eine erste Halteeinrichtung vorzugsweise an einem ersten Abschnitt und eine zweite Halteeinrichtung an einem zweiten Abschnitt angeordnet sein. Alternativ oder zusätzlich kann auch zumindest eine weitere Halteeinrichtung an einem der beiden Abschnitte oder an zumindest einem weiteren Abschnitt angeordnet sein.

Die wenigstens eine, insbesondere bzgl. der Abschnitte, verstellbare Halteeinrichtung ist bevorzugt selbst- und/oder fernbetätig, insbesondere mittels hydraulischer, pneumatischer und/oder elektrischer Stellelemente, verstellbar ausgeführt. Alternativ oder zusätzlich kann die wenigstens eine Halteeinrichtung manuell von einem Bediener und/oder automatisiert durch ein zugeordnetes Steuer- und/oder Regelsystem betätigbar sein. Ferner bevorzugt ist die wenigstens eine Halteeinrichtung oder wenigstens ein Ende der Halteeinrichtung bzgl. des jeweiligen zugeordneten Abschnitts vor oder während dem Wechsel zwischen den Stellungen zur Oberseite oder zur Unterseite des Gestänges, insbesondere des Abschnitts, hin verstellbar. Alternativ oder zusätzlich kann wenigstens eine Halteeinrichtung auch, insbesondere translatorisch und/oder parallel zur Fahrtrichtung, zum Abschnitt hin oder vom Abschnitt weg verstellbar sein.

Innerhalb der Transportstellung ist zwischen wenigstens zwei gegenüberliegenden und/oder einander zugewandten Abschnitten vorzugsweise wenigstens ein Zwischenraum zum Verbringen mehrerer Halteeinrichtungen ausgebildet. Erfindungsgemäß ist die wenigstens eine verstellbare Halteeinrichtung und wenigstens eine weitere Halteeinrichtung bevorzugt gemeinsam innerhalb des von den wenigstens zwei aufeinanderfolgenden Abschnitten eingeschlossenen Zwischenraums verbringbar. Alternativ oder zusätzlich kann zwischen einem der Abschnitte und wenigstens einem weiteren, insbesondere dritten Abschnitt, wenigstens ein weiterer Zwischenraum zum Verbringen wenigstens einer weiteren Halteeinrichtung oder vorzugsweise mehrere Halteeinrichtungen ausgebildet sind. Mit einer derartigen Ausführungsform ist das Gestänge samt der Halteeinrichtungen in Transportstellung besonders kompakt, insbesondere mit minimaler Breite und/oder Höhe des landwirtschaftlichen Geräts und/oder des Gestänges, ausgeführt.

In einer bevorzugten Ausführungsform des erfindungsgemäßen Gestänges sind wenigstens zwei, vorzugsweise an unterschiedlichen und/oder auf aufeinanderfolgenden Abschnitten angeordnete, Halteeinrichtungen verstellbar, und, insbesondere zum Schachteln des Gestänges, in der Transportstellung zumindest teilweise aneinander vorbeiführbar. Die Halteeinrichtungen sind dabei bevorzugt derart verstellbar, dass wenigstens zwei in einem Zwischenraum verbringbare Halteeinrichtungen in Transportstellung nebeneinander und/oder übereinander zwischen den Abschnitten angeordnet sind. Besonders bevorzugt sind alle Halteeinrichtungen verstellbar am Gestänge, insbesondere am jeweiligen dazu zugeordneten Abschnitt, angeordnet. Insbesondere kann hierbei auch ein von den verstellbaren Halteeinrichtungen zurückzulegender Verstellweg und/oder Verstellzeitpunkt unterschiedlich sein, wobei alternativ auch ein etwa gleich langer Verstellweg und/oder gleicher Verstellzeitpunkt der Halteeinrichtungen denkbar ist. Durch eine derartige Ausführungsform kann die Ausrichtung der Halteeinrichtungen für die Transportstellung in besonders hohem Maß zueinander variiert bzw. angepasst werden, wodurch der oder die Zwischenräume zwischen den zusammengeklappten Abschnitten besonders gut ausnutzbar sind.

In einer ferner bevorzugten Ausführungsform sind die Abschnitte eines Gestänges, insbesondere eines Auslegers, in Transportstellung zumindest teilweise ineinander verschachtelt angeordnet und/oder verbringbar.

In einer Weiterbildung des erfindungsgemäßen Gestänges sind die wenigstens zwei verstellbaren Halteeinrichtungen gegensätzlich verstellbar, vorzugsweise verschwenkbar. Bevorzugt ist wenigstens eine der verstellbaren Halteeinrichtungen oder wenigstens ein Ende der wenigstens einen Halteeinrichtung für die Transportstellung vorzugsweise senkrecht nach unten, insbesondere in Richtung des Untergurts und/oder der Arbeitsmittel, verschwenkbar und/oder verstellbar, während eine andere, vorzugsweise darauf folgende, Halteeinrichtung oder dessen wenigstens ein Ende senkrecht nach oben, insbesondere in eine vom Untergurt und/oder der Spritzdüsen abweisenden Richtung, verschwenkbar und/oder verstellbar ist. Mit anderen Worten ist hierbei vorzugsweise wenigstens eine erste Halteeinrichtung zur Oberseite des Gestänges hin und wenigstens eine zweite, insbesondere an einem darauffolgenden Abschnitt angeordnete, Halteeinrichtung zur Unterseite des Gestänges hin verschwenkbar ausgeführt. Somit ist ein ausreichend großer Abstand zwischen den Halteeinrichtung, bei jeweils minimalen Verstellweg der jeweiligen Halteeinrichtungen, erreichbar.

In einer weiteren Weiterbildung des erfindungsgemäßen Gestänges liegen mehrere oder alle Halteeinrichtungen in Transportstellung auf unterschiedlichen Positionen und/oder Höhenniveaus hinsichtlich einer Hochseite der zugeordneten Abschnitte. Die Hochseite des Gestänges, insbesondere der Abschnitte, ist zumindest im Wesentlichen zwischen der Oberseite, insbesondere dem Obergurt, und der Unterseite, insbesondere dem Untergurt, ausgebildet. Insbesondere wird die Hochseite hierbei zumindest im Wesentlichen durch die Diagonalelemente, insbesondere Streben, gebildet. Vorzugsweise sind in oder während der Arbeitsstellung mehrere der Halteeinrichtungen oder alle Halteeinrichtungen auf der gleichen Position oder dem gleichen Höhenniveau zur Hochseite der jeweiligen Abschnitte angeordnet. Hieraus resultiert für die Halteeinrichtungen und damit auch für die daran angeordneten Beleuchtungs- und/oder Erfassungselemente, insbesondere bei einem zumindest nahezu waagerecht ausgerichteten Gestänge, ein zumindest im Wesentlichen gleicher Abstand zur Nutzfläche und/oder zu den Pflanzen.

In einer anderen bevorzugten Ausführungsform des erfindungsgemäßen Gestänges weisen die Halteeinrichtungen jeweils eine Längsachse auf, die sich sowohl in Arbeitsstellung als auch in Transportstellung zumindest im Wesentlichen parallel zu den, insbesondere jeweils zugeordneten, Abschnitten erstreckt. Die Halteeinrichtungen sind hierbei bevorzugt länglich, insbesondere nach Art von Längsprofilen, beispielsweise U-Profilen, ausgeführt. Besonders bevorzugt erstreckt sich wenigstens eine der Halteeinrichtung, in der Länge gesehen, über einen Großteil des zugeordneten Abschnitts, sodass insbesondere eine Vielzahl von Beleuchtungs- und/oder Erfassungselementen, vorzugsweise in einem bestimmten Abstand von etwa 0,5 m, 1 m oder mehrzueinander, über die zugeordnete Halteeinrichtung am Gestänge angeordnet sind. Somit kann eine besonders große Anzahl an Beleuchtungs- und/oder Erfassungselementen gemeinsam an einer Halteeinrichtung und damit an einem Abschnitt angebracht werden. Darüber hinaus resultiert durch eine zumindest in etwa parallel zu den Abschnitten verlaufende Längsachse ein besonders kurzer Verstellweg und/oder Raumbedarf zu Verstellung der Halteeinrichtungen.

In einer anderen Weiterbildung des erfindungsgemäßen Gestänges sind die Halteeinrichtungen, vorzugsweise in einstellbarer Weise, um ihre Längsachse drehbar angeordnet und/oder ausgebildet. Vorzugsweise lassen sich die Halteeinrichtung hierbei unabhängig voneinander um ihre Längsachse verstellen und somit einstellen. Alternativ ist auch denkbar, dass Halteeinrichtungen auch gemeinsam und/oder synchron zueinander verstellbar sind. Die Verstellung kann hierbei manuell, insbesondere händisch oder fernbetätigt, von einem Bediener oder auch automatisiert von einem zugeordneten Steuer- und/oder Regelsystem ausgeführt werden. Insbesondere ist hierdurch erreicht, dass der Anstellwinkel der an einer Halteeinrichtung gemeinsam angeordneten Beleuchtungs- und/oder Erfassungselemente zur Nutzfläche und/oder zu den Pflanzen gesehen gemeinsam und damit vergleichsweise einfach und/oder mit geringem Aufwand verstellbar ist.

In einer weiteren bevorzugten Ausführungsform des erfindungsgemäßen Gestänges sind die Halteeinrichtungen nach Art von, vorzugsweise flachen, Profilen ausgebildet, wobei die Beleuchtungs- und/oder Erfassungselemente und/oder den Beleuchtungs- und/oder Erfassungselementen zugeordnete elektronische Module zumindest nahezu vollständig und/oder hineinragend in die Halteeinrichtungen, insbesondere in den Bauraum der Halteeinrichtungen, eingebettet sind. Die Halteeinrichtungen können vorzugsweise hohl und/oder als strangpressteile ausgebildet sein. Alternativ oder zusätzlich können die Halteeinrichtungen als, insbesondere Blech-, Umformteile, vorzugsweise jeweils nach Art wenigstens eines U-Profils, ausgebildet sein. Alternativ oder zusätzlich sind elektronischen Module der Beleuchtungs- und/oder Erfassungselemente zumindest nahezu vollständig innerhalb des Bauraums, insbesondere von den äußeren Abmessungen der jeweiligen Halteeinrichtung eingeschlossen, angeordnet. Durch eine derartige Ausführungsform ist erreicht, dass die Beleuchtungs- und/oder Erfassungselemente und/oder deren elektronischen Module zum einen besonders gut geschützt und zum anderen besonders platzsparend angeordnet sind. Zu den elektronischen Modulen der Beleuchtungs- und/oder Erfassungselemente zählen beispielweise Leistungselektronik, Steuergeräte, Auswerteeinrichtungen, elektronische Leitungen oder dergleichen.

Die der Erfindung zugrunde liegende Aufgabe wird ebenso mit einer landwirtschaftlichen Feldspritze zum Ausbringen von Spritzmittel auf einer landwirtschaftlichen Nutzfläche, mit einem Gestänge gelöst, wobei das Gestänge nach zumindest einer der vorstehenden beschriebenen Ausführungsformen des erfindungsgemäßen Gestänges ausgebildet ist. Hinsichtlich der Vorteile und Modifikationen der erfindungsgemäßen Feldspritze wird zunächst auf die Vorteile und Modifikationen des erfindungsgemäßen Gestänges verwiesen.

Weitere Einzelheiten der Erfindung sind der Beispielsbeschreibung und den Zeichnungen zu entnehmen. Die Zeichnungen zeigen
- Fig.1: eine perspektivische Vorderansicht eines an einer Feldspritze angeordneten Gestänges in ausgeklappter Arbeitsstellung und mit ausgeklappten Halteeinrichtungen;
- Fig.2A: das Gestänge aus Fig.1 mit eingeklappten Halteeinrichtungen;
- Fig.2B: die Halteeinrichtungen aus Fig.2A in näherer Ansicht;
- Fig.3A: das Gestänge und die Halteeinrichtungen in geschachtelter Transportstellung in einer Ansicht von vorne; und
- Fig.3B: das Gestänge aus der Fig.3A mit verdrehten Halteeinrichtungen.

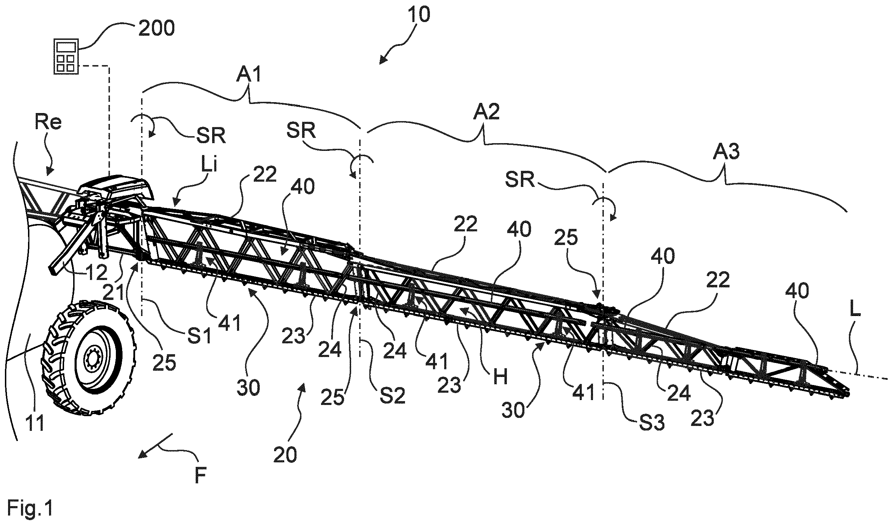

Ein als Feldspritze ausgebildetes landwirtschaftliches Gerät 10 mit wenigstens einem Vorratsbehälter 11 und über ein Geräterahmen 12 gekoppeltes und in Arbeitsstellung befindliches Gestänge 20 ist in der Fig.1 gezeigt. Es ist zu erkennen, dass das Gestänge 20 einen mit dem Geräterahmen 12 verbundenen Mittelteil 21 und sich quer zur Fahrtrichtung F bzw. Arbeitsrichtung gesehen, insbesondere jeweils nach links und rechts, erstreckende Ausleger Li, Re umfasst. Es ist weiterhin zu sehen, dass der linke Ausleger Li, insbesondere analog zum nicht gezeigten rechten Ausleger Re, mehrere Abschnitte A1-A3 aufweist, die klappbar und/oder schwenkbar über Gelenke 25 verbunden sind. Die einzelnen Abschnitte A1-A3 können dabei um eine vertikale Achse S1-S3 verklappt werden, so dass die Arbeitsbreite bzw. Spannweite des landwirtschaftlichen Geräts 10, insbesondere des Gestänges 20, angepasst und/oder zwischen einer Arbeits- und Transportstellung verfahren werden kann. Die Abschnitte A1-A3 sind hierbei insbesondere in einer durch einen Pfeil angedeutete Schwenkrichtung SR um die jeweilige Schwenkachse S1-S3 verschwenkbar ausgebildet, wobei die Schwenkrichtung SR von der Transport- in die Arbeitsstellung umgekehrt ist.

Die Fig.1 zeigt einen Zustand, in dem die Abschnitte A1-A3 vollständig ausgeklappt sind. Das Gestänge 20 lässt sich dabei alternativ oder zusätzlich um eine zumindest in etwa parallel zur Fahrtrichtung F verlaufende nicht gezeigte Achse pendeln und/oder in vertikaler Richtung, insbesondere mittels Stellelementen, verstellen.

Die Abschnitte A1-A3 weisen ferner jeweils einen entlang der Oberseite verlaufenden und aus Rohr- und/oder Blechkonstruktionen gebildeten Obergurt 22 und einen entlang der Unterseite verlaufenden und aus Rohr- und/oder Blechkonstruktionen gebildeten Untergurt 23 auf. Zwischen dem Obergurt 22 und dem Untergurt 23 sind weiterhin eine Mehrzahl von Diagonalelementen 24, insbesondere Streben, angeordnet, die außerdem im Wesentlichen eine Hochseite H des Gestänges 20, insbesondere der Abschnitte A1-A3, bilden. Unterhalb des Untergurts 23 sind eine Vielzahl von als Spritzdüsen ausgebildete Arbeitsmittel 30 angeordnet, die fluidleitend mit dem wenigstens einen Vorratsbehälter 11 verbunden sind und dazu eingerichtet sind, ein im Vorratsbehälter 11 bevorratetes Spritzmittel auf einer landwirtschaftlichen Nutzfläche und/oder einer Pflanze, insbesondere Nutzpflanze und/oder Unkraut, zu applizieren. Im gezeigten Anwendungsfall kann das Spritzmittel insbesondere als Pflanzenschutzmittel, Düngemittel und/oder Unkrautbekämpfungsmittel ausgeführt sein. Ferner kann das landwirtschaftliche Gerät 10 alternativ oder zusätzlich wenigstens einen weiteren, beispielsweise als Fronttank ausgebildeten, Vorratsbehälter umfassen, der fluidleitend mit den Arbeitsmitteln 30, insbesondere den Spritzdüsen, verbunden ist.

In einer zur gezeigten alternativen Ausführungsform, kann das landwirtschaftliche Gerät 10 auch als Sä- und/oder Düngermaschine ausgebildeten sein, bei dem die Arbeitsmittel 30 als Dosier-, Ausbring- und/oder Ablegeeinrichtungen ausgebildet sind und dazu eingerichtet sind, granulares Material auf der Nutzfläche auszubringen. In einer weiteren alternativen nicht gezeigten Ausführungsform kann das landwirtschaftliche Gerät 10 auch als Bodenbearbeitungsgerät und/oder Pflanzenbehandlungsgerät ausgebildeten sein und Arbeitsmittel 30 aufweisen, die zumindest teilweise in einen Ackerboden eingreifen.

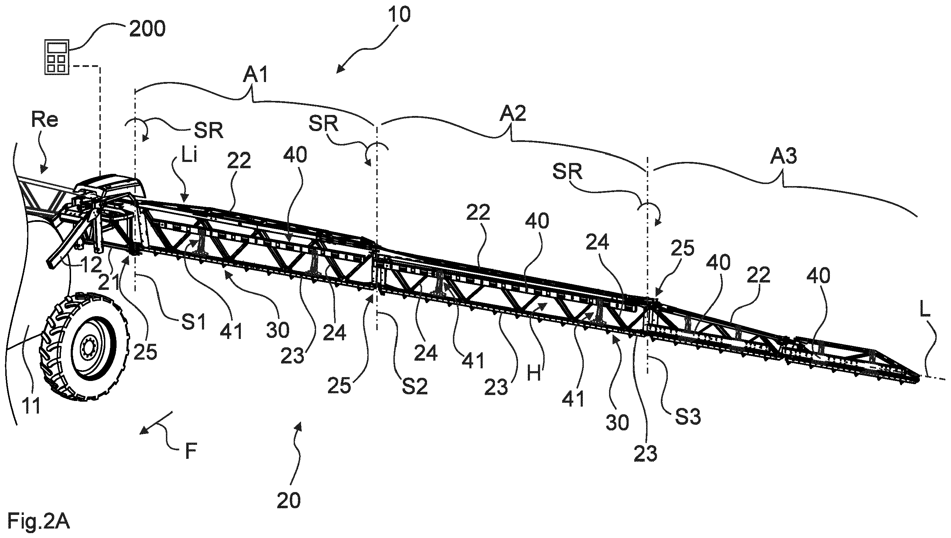

Darüber hinaus ist, insbesondere in der Fig.2A und/oder 2B, zu erkennen, dass das landwirtschaftliche Gerät 10 wenigstens eine Beleuchtungs- und/oder Erfassungsvorrichtung 5 umfasst, welche dem Gestänge 20 zugeordnet ist. Die Beleuchtungs- und/oder Erfassungsvorrichtung 5 weist dabei eine Mehrzahl von Beleuchtungs- und/oder Erfassungselementen 50, 51 auf, die über mehrere den Abschnitten A1-A3 zugeordnete Halteeinrichtungen 40 mit den Abschnitten A1-A3 gekoppelt sind. Die Halteeinrichtungen 40 sind jeweils über Schwenkarme 41 in verstellbarer Weise, insbesondere verschwekbar um eine parallel zu den Abschnitten A1-A3 verlaufende Verstellachse 42, mit den Abschnitten A1-A3 verbunden. Im gezeigten Ausführungsbeispiel sind mehrere, insbesondere alle, Halteeinrichtungen 40 verstellbar ausgeführt, wobei alternativ auch nur eine der Halteeinrichtungen 40 verstellbar sein kann.

Weiterhin ist zu sehen, dass die Halteeinrichtungen 40 jeweils an unterschiedlichen und/oder auf aufeinanderfolgenden Abschnitten A1-A3 angeordnet sind. Insbesondere ist eine erste Halteeinrichtung 40 an einem mit dem Mittelteil 21 verbundenen Innenabschnitt A1, eine zweite Halteeinrichtung 40 an einem mit dem Innenabschnitt A1 verbundenen Mittelabschnitt A2 und eine dritte und/oder vierte Halteeinrichtung 40 an einem mit dem Mittelabschnitt A2 verbundenen Außenabschnitt A3 angeordnet. Alternativ oder zusätzlich kann auch wenigstens eine weitere Halteeinrichtung 40 an den Abschnitten A1-A3 angeordnet sein, und/oder eine der Halteeinrichtungen 40 eines Abschnitts A1-A3 mit wenigstens einer weiteren Halteeinrichtung 40 wenigstens eines anderen Abschnitts A1-A3 verbunden und/oder gekoppelt sein.

Die Halteeinrichtungen 40 sind des Weiteren nach Art von, insbesondere flachen und/oder u-förmigen, Profilen ausgebildet, wobei die Beleuchtungs- und/oder Erfassungselemente 50, 51 und/oder den Beleuchtungs- und/oder Erfassungselementen 50, 51 zugeordnete elektronische Module dabei zumindest nahezu vollständig und/oder hineinragend in die Halteeinrichtungen 40, insbesondere in den Bauraum der Halteeinrichtungen 40, eingebettet sind. Hierdurch ist ein besonders guter Schutz der elektronischen Komponenten erreicht. Alternativ oder zusätzlich können die Beleuchtungs- und/oder Erfassungselemente 50, 51 auch zumindest teilweise außerhalb und/oder von außen an den Halteeinrichtungen 40 angeordnet sein.

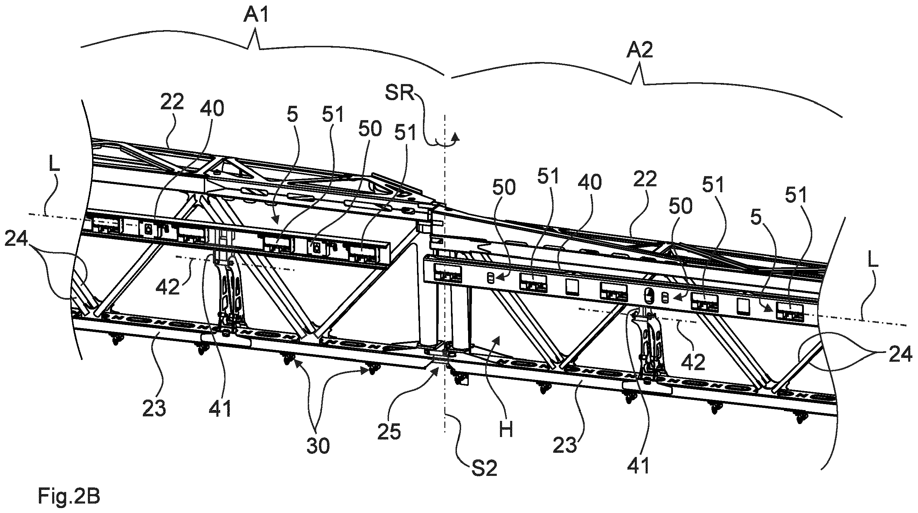

Die Fig.2A und 2B zeigt einen Zustand, in dem die Abschnitte A1-A3 weiterhin in Arbeitsstellung ausgeklappt sind, während die Halteeinrichtungen 40, insbesondere bereits in Transportstellung oder Außerbetriebstellung, verstellt und/oder verschwenkt, insbesondere eingeklappt, sind. Es ist zu erkennen, dass die Halteeinrichtungen 40 des ersten und zweiten Abschnitts A1, A2, insbesondere des Innenabschnitts und Mittelabschnitts, zur Oberseite und/oder zum Obergurt 22 hin verstellt und/oder verschwenkt sind, während die Halteeinrichtungen 40 am dritten Abschnitt, insbesondere Außenabschnitt A3, in entgegengesetzter Richtung und/oder zur Unterseite und/oder zum Untergurt 23 hin verstellt und/oder verschwenkt sind. Alternativ oder zusätzlich zur gezeigten Ausführungsform ist denkbar, dass zumindest ein Ende wenigstens einer Halteeinrichtung 40 verstellbar und/oder verschwenkbar ist. Ferner ist alternativ oder zusätzlich eine zumindest teilweise translatorische Verstellung der Halteeinrichtungen 40, insbesondere in und/oder senkrecht zur Fahrtrichtung F, denkbar. Außerdem ist zu erkennen, dass sich eine Längsachse L der Halteeinrichtungen 40 sowohl in der in Fig.1 gezeigten Arbeitsstellung, als auch in der, in Fig.2A und 2B gezeigten, eingeklappten Stellung, zumindest im Wesentlichen parallel zu den Abschnitten (A1-A3) erstreckt.

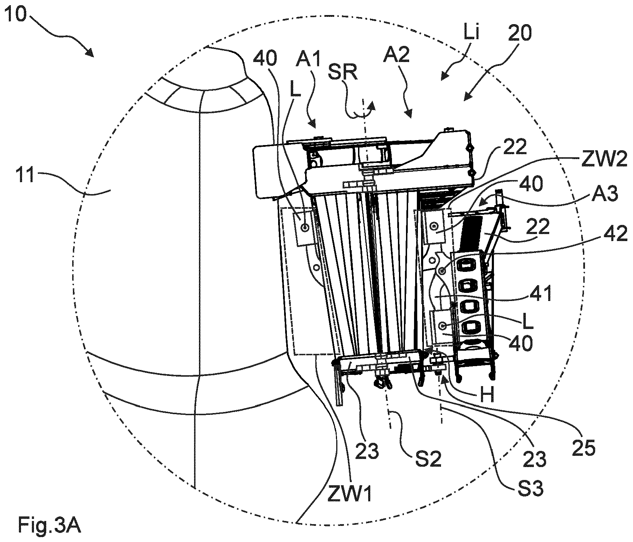

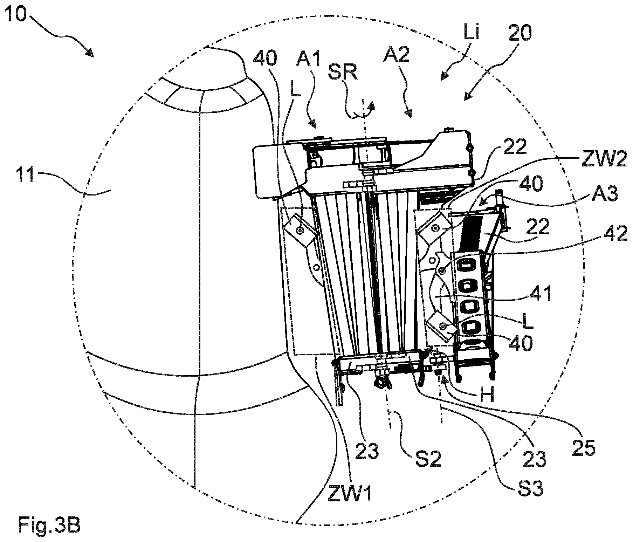

Die Fig.3A und 3B zeigen eine in Fahrtrichtung F weisende zusammengefaltete Transportstellung des Gestänges 20, bei dem ein Teil des Vorratsbehälters 11 und der linke Ausleger Li in einer Ansicht von vorne und entgegen der Fahrtrichtung F zu sehen ist. Alternativ zur gezeigten Ausführungsform können die zusammengefalteten Abschnitte A1-A3 hierbei auch etwa senkrecht zur Arbeitsrichtung bzw. Fahrtrichtung F weisend ausgerichtet sein. Die in der Arbeitsstellung in Fahrtrichtung weisende Hochseite H des ersten Abschnitts A1 ist in der Transportstellung dem Vorratsbehälter 11 zugewandt. Ferner ist hierbei die am ersten Abschnitt A1, insbesondere am Innenabschnitt, angeordnete Halteeinrichtung 40 in einem zwischen dem Vorratsbehälter 11 und dem ersten Abschnitt A1 eingeschlossenen ersten Zwischenraum ZW1 angeordnet und/oder verbringbar. Insbesondere wird der erste Zwischenraum ZW1 in vertikaler Richtung unterhalb eines zum Vorratsbehälter 11 vorspringenden Teils des Obergurts 22 gebildet. Weiterhin ist zu sehen, dass wenigstens eine der verstellbaren Halteeinrichtung 40 mit wenigstens einer weiteren Halteeinrichtung 40 zwischen zwei aufeinanderfolgenden Abschnitten A2, A3, insbesondere zwischen dem Mittelabschnitt und dem Außenabschnitt, verbringbar ist. Die wenigstens zwei Halteeinrichtung 40 sind dabei insbesondere innerhalb eines von den wenigstens zwei gegenüberliegenden Abschnitten A2, A3 eingeschlossenen zweiten Zwischenraums ZW2 gegenüberliegend und/oder gemeinsam angeordnet. Die Zwischenräume ZW1, ZW2 sind in den Fig.3A und 3B jeweils durch eine unterbrochene Umrandung angedeutet.

Um die Halteeinrichtungen 40, wie in den Fig.3A und 3B gezeigt, zwischen den beiden aufeinanderfolgenden und/oder gegenüberliegenden Abschnitten A2, A3 zu verbringen, sind die Halteeinrichtungen 40 derart, insbesondere gegensätzlich, verstellbar und/oder verschwenkbar, sodass sie in Transportstellung zumindest teilweise aneinander vorbeiführbar sind. Es ist zu sehen, dass die im gemeinsamen Zwischenraum ZW2 verbringbaren Halteeinrichtungen 40 ferner auf unterschiedlichen Höhenniveaus hinsichtlich einer Hochseite H der ihnen zugeordneten Abschnitte A2, A3 liegen. In der gezeigten Transportstellung ist die mit dem zweiten Abschnitt A2, insbesondere Mittelabschnitt, gekoppelte Halteeinrichtung 40 ferner im Bereich des Obergurts 22 angeordnet, während die mit dem dritten Abschnitt A3, insbesondere Außenabschnitt, gekoppelte Halteeinrichtung 40 im Bereich des Untergurts 23 angeordnet ist.

Darüber hinaus ist die Längsachse L der Halteeinrichtungen 40 gezeigt, um die die Halteeinrichtungen 40 jeweils drehbar angeordnet und/oder ausgebildet sind. Dies wird durch die Fig.3B verdeutlicht. Die Halteeinrichtungen 40 können somit zusätzlich mit einem Winkel W um ihre Längsachse L angestellt und/oder verdreht werden. Hierüber kann beispielsweise der Anstellwinkel der Beleuchtungs- und/oder Erfassungselemente 50, 51 zur Nutzfläche und/oder zu den Pflanzen und damit der Abstand des Bereichs der beleuchtet und/oder erfasst wird zum Gestänge 20 in einfacher und/oder gemeinsamer Weise angepasst werden.

Die Halteeinrichtungen 40 werden ferner motorisch, insbesondere mittels hydraulischer, pneumatischer und/oder elektrischer Stellelemente, verstellt. Hierbei kann ferner sowohl die Verstellung der Halteeinrichtungen 40 als auch des Gestänges 20, insbesondere der Abschnitte A1-A3, manuell von einem Bediener und/oder automatisiert vom zugeordneten Steuer- und/oder Regelsystem 200 initiiert werden. Alternativ oder zusätzlich kann wenigstens eine Halteeinrichtungen 40 auch selbsttätig, insbesondere federbelastet, durch Andrücken gegen einen Abschnitt A1-A3 verstellbar sein.

Die in den Figuren gezeigten Beleuchtungselemente 51 sind jeweils nach Art einer Lichtquelle, insbesondere in Form einer LED's, ausgebildet und dazu eingerichtet, die Umgebung, insbesondere im Nahbereich, um das Gestänge 20 und/oder unter dem Gestänge 20 auszuleuchten. Alternativ hierzu wären auch andere Arten von Leuchtmitteln denkbar, beispielsweise mit infrarot-, ultraviolett oder anderen Wellenlängen. Die gezeigten Erfassungselemente 50 sind nach Art von bilderfassenden Kameras ausgebildet und dazu eingerichtet, Informationen und/oder Eigenschaften aus und/oder zur Umgebung, insbesondere zur Nutzfläche und/oder zu den Pflanzen zu erfassen. Alternativ oder zusätzlich sind auch Erfassungselemente 50 denkbar, die nach Art von berührungsfreien Sensoren, beispielsweise Abstandssensoren (Ultraschall-, Radarsensoren), Temperatursensoren, Windsensoren, Bodenwertesensoren oder dergleichen ausgebildet sind. Ferner können die als separate Komponenten gezeigten Beleuchtungselemente 51 und Erfassungselemente 50 alternativ oder zusätzlich auch zu einer Komponente zusammengefasst ausgebildet sein, beispielsweise bestehend aus wenigstens einem Beleuchtungselement 51 mit wenigstens einem Erfassungselement 50. Darüber hinaus wäre alternativ auch denkbar, dass das landwirtschaftliche Gerät 10 und/oder das Gestänge 20 nur Beleuchtungselemente 51 oder nur Erfassungselemente 50 umfasst, die an den erfindungsgemäßen Halteeinrichtungen 40 angeordnet sind.

Es versteht sich, dass in den Figuren gezeigte Geometrien nur beispielhaft sind und auch in beliebigen anderen Ausgestaltungen möglich sind.

### Bezugszeichenliste

- 5: Beleuchtungs- und/oder Erfassungsvorrichtung
- 10: landwirtschaftliches Gerät, Feldspritze
- 11: Vorratsbehälter
- 12: Geräterahmen
- 20: Gestänge
- 21: Mittelteil
- 22: Obergurt
- 23: Untergurt
- 24: Diagonalelemente
- 25: Gelenk
- 30: Arbeitsmittel, Spritzdüse
- 40: Halteeinrichtung
- 41: Schwenkarm
- 42: Verstellachse der Halteeinrichtung
- 50: Erfassungselement
- 51: Beleuchtungselement
- 200: Steuer- und/oder Regelsystem

- A1: erster Abschnitt, Innenabschnitt
- A2: zweiter Abschnitt, Mittelabschnitt
- A3: dritter Abschnitt, Außenabschnitt
- F: Fahrtrichtung
- H: Hochseite des Abschnitts
- L: Längsachse der Halteeinrichtung
- Li: linker Ausleger
- Re: rechter Ausleger
- S1: Schwenkachse des ersten Abschnitts
- S2: Schwenkachse des zweiten Abschnitts
- S3: Schwenkachse des dritten Abschnitts
- SR: Schwenkrichtung
- W: Winkel der Halteeinrichtung um Längsachse
- ZW1: Zwischenraum zwischen erstem Abschnitt und Vorratsbehälter
- ZW2: Zwischenraum zwischen zweitem und drittem Abschnitt

## Patentansprüche

1. Gestänge (20) eines landwirtschaftlichen Geräts (10), insbesondere Verteilgestänge einer Feldspritze, mit mehreren Abschnitten (A1-A3), die über Gelenke (25) zwischen einer, vorzugsweise quer zu einer Arbeitsrichtung, ausgeklappten Arbeitsstellung, und einer, vorzugsweise etwa in oder senkrecht zur Arbeitsrichtung weisenden, zusammengefalteten Transportstellung verstellbar sind, mit wenigstens einer Beleuchtungs- und/oder Erfassungsvorrichtung (5), die eine Mehrzahl von Beleuchtungs- und/oder Erfassungselementen (50, 51) umfasst, welche über mehrere Halteeinrichtungen (40) verteilt mit den Abschnitten (A1-A3) gekoppelt sind, wobei wenigstens eine der Halteeinrichtungen (40) zwischen Arbeits- und Transportstellung verstellbar an wenigstens einem der Abschnitte (A1-A3) angeordnet ist, **dadurch gekennzeichnet, dass** die wenigstens eine verstellbare Halteeinrichtung (40) in Transportstellung gemeinsam mit wenigstens einer weiteren Halteeinrichtung (40) zwischen zwei aufeinanderfolgenden Abschnitten (A1-A3), innerhalb eines der wenigstens zwei aufeinanderfolgenden Abschnitte (A1-A3) eingeschlossenen Zwischenraums, verbringbar ist.

2. Gestänge (20) nach Anspruch 1, **dadurch gekennzeichnet, dass** wenigstens zwei, vorzugsweise an unterschiedlichen und/oder auf aufeinanderfolgenden Abschnitten (A1-A3) angeordnete, Halteeinrichtungen (40) verstellbar sind; und, insbesondere zum Schachteln des Gestänges (20), in der Transportstellung zumindest teilweise aneinander vorbeiführbar sind.

3. Gestänge (20) nach Anspruch 2, **dadurch gekennzeichnet, dass** die wenigstens zwei verstellbaren Halteeinrichtungen (40) gegensätzlich verstellbar, vorzugsweise verschwenkbar, sind.

4. Gestänge (20) nach zumindest einem der vorgenannten Ansprüche 1 bis 3, **dadurch gekennzeichnet, dass** mehrere oder alle Halteeinrichtungen (40) in Transportstellung auf unterschiedlichen Positionen und/oder Höhenniveaus hinsichtlich einer, zwischen Oberseite und Unterseite ausgebildeten, Hochseite (H) der zugeordneten Abschnitte (A1-A3) liegen.

5. Gestänge (20) nach zumindest einem der vorgenannten Ansprüche 1 bis 4, **dadurch gekennzeichnet, dass** die Halteeinrichtungen (40) jeweils eine Längsachse (L) aufweisen, die sich sowohl in Arbeitsstellung als auch in Transportstellung zumindest im Wesentlichen parallel zu den, insbesondere jeweils zugeordneten, Abschnitten (A1-A3) erstreckt.

6. Gestänge (20) nach Anspruch 5, **dadurch gekennzeichnet, dass** die Halteeinrichtungen (40), vorzugsweise in einstellbarer Weise, um ihre Längsachse (L) drehbar angeordnet und/oder ausgebildet sind.

7. Gestänge (20) nach zumindest einem der vorgenannten Ansprüche 1 bis 6, **dadurch gekennzeichnet, dass** die Halteeinrichtungen (40) nach Art von, vorzugsweise flachen, Profilen ausgebildet sind, und dass die Beleuchtungs- und/oder Erfassungselemente und/oder den Beleuchtungs- und/oder Erfassungselementen (50, 51) zugeordnete elektronische Module zumindest nahezu vollständig und/oder hineinragend in die Halteeinrichtungen (40), insbesondere in den Bauraum der Halteeinrichtungen (40), eingebettet sind.

8. Landwirtschaftliche Feldspritze (10) zum Ausbringen von Spritzmittel auf einer landwirtschaftlichen Nutzfläche, mit einem Gestänge (20), **dadurch gekennzeichnet, dass** das Gestänge (20) nach zumindest einem der vorgenannten Ansprüche ausgebildet ist.

## Claims

1. Boom (20) of an agricultural implement (10), in particular a distribution boom of a field sprayer, comprising a plurality of portions (A1-A3) which are adjustable via joints (25) between a working position, preferably folded out transversely to a working direction, and a folded-in transport position, preferably pointing approximately in or perpendicularly to the working direction, comprising at least one illuminating and/or detection device (5) which has a plurality of illuminating and/or detection elements (50, 51), which are coupled to the portions (A1-A3) in a distributed manner via a plurality of holding devices (40), wherein at least one of the holding devices (40) is arranged on at least one of the portions (A1-A3) so as to be adjustable between the working position and the transport position, **characterized in that** the at least one adjustable holding device (40) can be brought into the transport position together with at least one further holding device (40) between two successive portions (A1-A3), within a gap enclosed by the at least two successive portions (A1-A3).

2. Boom (20) according to claim 1, **characterized in that** at least two holding devices (40), preferably arranged on different and/or successive portions (A1-A3), are adjustable; and, in particular for nesting the boom (20), can be guided at least partially past one another in the transport position.

3. Boom (20) according to claim 2, **characterized in that** the at least two adjustable holding devices (40) can be adjusted, preferably pivotably, in opposite directions.

4. Boom (20) according to at least one of the preceding claims 1 to 3, **characterized in that** several or all holding devices (40) in the transport position are located at different positions and/or height levels with respect to a high side (H) of the associated portions (A1-A3) formed between the upper side and the lower side.

5. Boom (20) according to at least one of the preceding claims 1 to 4, **characterized in that** the holding devices (40) each have a longitudinal axis (L) which, both in the working position and in the transport position, extends at least substantially in parallel with the, in particular respectively associated, portions (A1-A3).

6. Boom (20) according to claim 5, **characterized in that** the holding devices (40) are arranged and/or designed to be rotatable about their longitudinal axis (L), preferably in an adjustable manner.

7. Boom (20) according to at least one of the preceding claims 1 to 6, **characterized in that** the holding devices (40) are designed in the manner of, preferably flat, profiles, **and in that** the illuminating and/or detection elements and/or electronic modules associated with the illuminating and/or detection elements (50, 51) are embedded at least almost completely in and/or so as to project into the holding devices (40), in particular in the installation space of the holding devices (40).

8. Agricultural field sprayer (10) for applying spraying agent to an agricultural area, comprising a boom (20), **characterized in that** the boom (20) is designed according to at least one of the preceding claims.

## Revendications

1. Rampe (20) d'un appareil agricole (10), en particulier rampe de distribution d'un pulvérisateur agricole, comportant plusieurs sections (A1-A3) qui sont réglables par l'intermédiaire d'articulations (25) entre une position de travail déployée, de préférence transversalement à une direction de travail, et une position de transport repliée, de préférence orientée approximativement dans la direction de travail ou perpendiculairement à celle-ci, comportant au moins un dispositif d'éclairage et/ou de détection (5) qui comprend une pluralité d'éléments d'éclairage et/ou de détection (50, 51), lesquels sont couplés aux sections (A1-A3) en étant répartis sur plusieurs moyens de retenue (40), au moins l'un des moyens de retenue (40) étant disposé de manière réglable entre la position de travail et la position de transport sur au moins l'une des sections (A1-A3), **caractérisée en ce que** l'au moins un moyen de retenue (40) réglable peut être amené dans la position de transport conjointement avec au moins un autre moyen de retenue (40) entre deux sections (A1-A3) successives, à l'intérieur d'un espace intermédiaire enfermé dans une section parmi les au moins deux sections (A1-A3) successives.

2. Rampe (20) selon la revendication 1, **caractérisée en ce qu'**au moins deux moyens de retenue (40), de préférence disposés sur des sections (A1-A3) différentes et/ou successives, sont réglables ; et, en particulier pour l'imbrication de la rampe (20), peuvent passer au moins partiellement l'un devant l'autre dans la position de transport.

3. Rampe (20) selon la revendication 2, **caractérisée en ce que** les au moins deux moyens de retenue (40) réglables sont réglables de manière opposée, de préférence de manière pivotante.

4. Rampe (20) selon au moins l'une des revendications précédentes 1 à 3, **caractérisée en ce que** plusieurs ou tous les moyens de retenue (40) se trouvent, dans la position de transport, dans des positions et/ou à des niveaux de hauteur différents par rapport à un côté haut (H) des sections (A1-A3) associées, lequel est formé entre un côté supérieur et un côté inférieur.

5. Rampe (20) selon au moins l'une des revendications précédentes 1 à 4, **caractérisée en ce que** les moyens de retenue (40) présentent respectivement un axe longitudinal (L) qui s'étend au moins sensiblement de manière parallèle aux sections (A1-A3), en particulier respectivement associées, aussi bien dans la position de travail que dans la position de transport.

6. Rampe (20) selon la revendication 5, **caractérisée en ce que** les moyens de retenue (40) sont disposés et/ou réalisés de manière à pouvoir tourner, de préférence de manière réglable, autour de leur axe longitudinal (L).

7. Rampe (20) selon au moins l'une des revendications précédentes 1 à 6, **caractérisée en ce que** les moyens de retenue (40) sont réalisés à la manière de profilés, de préférence plats, **et en ce que** les éléments d'éclairage et/ou de détection et/ou des modules électroniques associés aux éléments d'éclairage et/ou de détection (50, 51) sont encastrés au moins de manière quasiment complète et/ou en saillie dans les moyens de retenue (40), en particulier dans l'espace de montage des moyens de retenue (40).

8. Pulvérisateur agricole (10) destiné à épandre des produits de pulvérisation sur une surface agricole utile, comportant une rampe (20), **caractérisé en ce que** la rampe (20) est réalisée selon au moins l'une des revendications précédentes.
